# EUROPÄISCHE PATENTSCHRIFT

(11) **EP 1 212 889 B1**
(45) Veröffentlichungstag und Bekanntmachung des Hinweises auf die Patenterteilung: **23.11.2005**
(21) Anmeldenummer: 00974300.6
(22) Anmeldetag: 07.09.2000
(51) Int. Cl.: H04M 7/00, H04Q 7/22, H04B 7/26

(54) **VERFAHREN UND ANORDNUNG ZUM SYNCHRONISIEREN VON BASISSTATIONEN EINES MOBILEN KOMMUNIKATIONSNETZES**
VERFAHREN UND ANORDNUNG ZUM SYNCHRONISIEREN VON BASISSTATIONEN EINES MOBILEN KOMMUNIKATIONSNETZES
PROCEDE ET DISPOSITIF POUR LA SYNCHRONISATION DE STATIONS DE BASE D'UN RESEAU DE COMMUNICATION MOBILE

(30) Priorität: 13.09.1999 DE 19943778
(43) Veröffentlichungstag der Anmeldung: 12.06.2002
(73) Patentinhaber: SIEMENS AKTIENGESELLSCHAFT, 80333 München (DE)
(72) Erfinder: HEITMANN, Jürgen, 82061 Neuried (DE)
(86) Internationale Anmeldenummer: PCT/DE2000/003106
(87) Internationale Veröffentlichungsnummer: WO 2001/020889

(56) Entgegenhaltungen:
- EP-A- 0 777 343
- DE-A- 19 752 945
- US-A- 5 912 886

## Beschreibung

Bei vielen Kommunikationssystemen werden Endgeräte, die unterschiedlichen Zwecken, wie z.B. einem Übertragen von Sprach-, Video-, Fax-, Multimedia-, Informations-, Text-, Programm- und/oder Meßdaten dienen können, in zunehmenden Maße drahtlos angekoppelt. Eine Verbindung zu derartigen mobilen Endgeräten wird üblicherweise über an ein Kommunikationsnetz angekoppelte, sogenannte Basisstationen erstellt, die über eine Luftschnittstelle mit den mobilen Endgeräten in Verbindung treten können. Unter mobilen Endgeräten werden im folgenden auch sogenannte schnurlose Endgeräte verstanden.

Ein Austausch von Nutzdaten über die Luftschnittstelle zwischen einem mobilen Endgerät und einer Basisstation erfolgt in der Regel innerhalb von durch einen Zeittakt vorgegebenen Zeitrahmen, die im folgenden auch als Funk-Zeitrahmen bezeichnet werden.

Der Bereich um eine Basisstation in dem eine drahtlose Verbindung vorgegebener Qualität zwischen einem mobilen Endgerät und dieser Basisstation herstellbar ist, wird auch als Funkzelle dieser Basisstation bezeichnet. Um einen größeren Bereich mit Verbindungsmöglichkeiten zu versorgen, sind in der Regel mehrere Basisstationen so über den zu versorgenden Bereich verteilt, daß ihre Funkzellen ein flächendeckendes Funknetz bilden. Ein in einem solchen Funknetz registriertes, mobiles Endgerät kann dabei zwischen den jeweils in Funkreichweite befindlichen Basisstationen dieses Funknetzes beliebig wechseln. Das "Weiterreichen" eines mobilen Endgerätes von einer ersten Basisstation zu einer zweiten Basisstation bei bestehender Verbindung wird auch als "handover" bezeichnet. In der Regel soll ein solcher Wechsel des Verbindungsverlaufes möglichst ohne wahrnehmbare Unterbrechung der Verbindung erfolgen. In diesem Fall spricht man auch von einem "seamless handover".

Eine Durchführung eines "seamless handover" setzt allerdings voraus, daß die beteiligten Basisstationen bezüglich der Luftschnittstelle zueinander synchron sind. Beispielsweise sind über eine DECT-Luftschnittstelle zu übertragende Nutzdaten in Funk-Zeitrahmen eingebettet, deren Beginn bei den an einem "seamless handover" beteiligten Basisstationen nur maximal 2 µs voneinander abweichen darf.

In diesem Sinne ist unter einem Synchronisieren von Basisstationen insbesondere ein Synchronisieren von einem Nutzdatenaustausch mit mobilen Endgeräten zugrunde liegenden Funk-Zeitrahmen verschiedener Basisstationen zu verstehen.

Aus der Offenlegungsschrift WO 96/38990 ist ein mobiles Kommunikationssystem bekannt, bei dem Basisstationen jeweils über eine S₀-Schnittstelle gemäß ISDN-Standard an eine Nebenstellenanlage angeschlossen sind. Den Basisstationen wird dabei über die S₀-Schnittstelle auf der physikalischen Schicht des verwendeten Übertragungsprotokolls ein Referenztakt von der Nebenstellenanlage übermittelt. Anhand des von allen Basisstationen gleichermaßen empfangenen Referenztaktes werden die Taktgeneratoren dieser Basisstationen synchronisiert.

In Anbetracht einer zunehmenden Vernetzung von Kommunikationssystemen, einer zunehmenden Integration von Sprach- und Datendiensten sowie einer zunehmenden Nutzung von komplexen Leistungsmerkmalen durch mobile Endgeräte erweist sich eine Anschaltung von Basisstationen über S₀-Schnittstellen allerdings als wenig flexibel. Die mangelnde Flexibilität wird insbesondere durch die Übertragung des Referenztaktes in der physikalischen Schicht des verwendeten Übertragungsprotokolls bedingt, da hierfür durchgehende Schicht-1-Verbindungen zwischen der Nebenstellenanlage und den Basisstationen erforderlich sind.

Aus dem Dokument DE 19752945 A1 ist ein Verfahren zur Synchronisation von Basisstationen bekannt, bei dem zur Synchronisation zwei verschiedene Signale, nämlich ein Rahmensynchronsignal und eine Zeitverzögerungsinformation verwendet werden. Zur Übermittlung dieser Signale sind jedoch in der Regel unterschiedliche Übertragungsprotokolle auf unterschiedlichen Protokollschichten zu implementieren, was einen verhältnismäßig hohen Aufwand erfordert.

Weitere Verfahren und Anordnungen zur Synchronisation von Basisstationen sind aus den Druckschriften US 5912886, bei der ein sog. "Timing Control Center" zur Synchronisation verwendet wird, und EP 777343 A2, bei der ein freier B-Kanal eines ISDN-Netzes genutzt wird, bekannt. Die in diesen Dokumenten beschriebenen Synchronisationssysteme lassen sich jedoch nur schwer in unterschiedliche Kommunikationsumgebungen portieren.

Es ist Aufgabe der vorliegenden Erfindung ein gegenüber dem Stand der Technik flexibleres Verfahren zum Synchronisieren von Basisstationen eines mobilen Kommunikationsnetzes, insbesondere zum Zweck eines "seamless handover" anzugeben. Außerdem ist eine Anordnung zur Realisierung des Verfahrens anzugeben.

Gelöst wird diese Aufgabe durch ein Verfahren mit den Merkmalen des Patentanspruchs 1 und durch eine Anordnung mit den Merkmalen des Patentanspruchs 15.

Vorteilhafte Ausführungsformen und Weiterbildungen der Erfindung sind in den Unteransprüchen angegeben.

Um Basisstationen eines mobilen Kommunikationsnetzes hinsichtlich ihrer Luftschnittstelle zu synchronisieren, werden den Basisstationen Zeitinformationen über ein Lokales Netz, z.B. von einem Zeitinformationsserver übermittelt. Indem die Basisstationen ein jeweils eigenes Zeitmaß an einer empfangenen Zeitinformation ausrichten, werden diese Basisstation zueinander synchronisiert.

Das Lokale Netz, das häufig auch als LAN bezeichnet wird, kann auf vielfältige Weise, wie z.B. als "Ethernet", "Token Ring", "Token Bus" oder "FDDI", realisiert sein. Die Erfindung erlaubt es, Basisstationen auch in komplexen mobilen Kommunikationsnetzen mit geringem Aufwand zu synchronisieren. Insbesondere können Basisstationen auf einfache Weise in lokale Computernetze integriert werden, wobei eine bestehende Netzwerkinfrastruktur zur Synchronisierung genutzt werden kann. Ein Anschluß von Basisstationen eines mobilen Kommunikationsnetzes an ein Lokales Netz ist insbesondere auch im Hinblick auf eine zunehmende Integration von Sprach- und Datenkommunikation vorteilhaft.

Ein wesentlicher Gesichtspunkt der Erfindung ist die Tatsache, daß sich ein Übermitteln von Zeitinformationen über ein Lokales Netz besonders gut zum Synchronisieren von Basisstationen zum Zweck eines "seamless handover" eignet. Da an einem "handover"-Vorgang im wesentlichen nur zueinander benachbarte Basisstationen beteiligt sind, müssen auch nur die Funk-Zeitrahmen benachbarter Basisstationen zum Zeitpunkt des "handover" mit hoher Genauigkeit zueinander synchron sein. Durch die Erfindung kann nun gerade bei einander benachbarten Basisstationen eine hohe Synchronisationsgenauigkeit erzielt werden, da sich bei benachbarten Basisstationen sowohl die Laufzeiten einer Zeitinformation zur jeweiligen Basisstation als auch die Laufzeitschwankungen nur geringfügig unterscheiden.

Nach einer vorteilhaften Ausführungsform der Erfindung kann der Zeittaktgeber einer Basisstation durch Nachregeln seiner Taktfrequenz und/oder Phasenlage justiert werden. Zur Vermeidung von abrupten Änderungen der Taktfrequenz und/oder Phasenlage kann ein entsprechendes Regelsignal über ein Integrierglied zum Zeittaktgeber geführt werden. Alternativ dazu kann ein Fehlstand des Zeitgebers auch durch Einfügen oder Auslassen von Zeittakten korrigiert werden.

Nach einer vorteilhaften Weiterbildung der Erfindung kann eine Zeitinformation durch eine Basisstation über das lokale Netz von einem Zeitinformationsserver angefordert werden. Die Anforderung kann dabei vorzugsweise über bekannte Netzwerkprotokolle, wie z.B. das sogenannte "Network Time Protocol" (NTP) oder das sogenannte "Digital Time Synchronization Protocol" (DTSS), erfolgen.

Zur Verbesserung der Genauigkeit einer erhaltenen Zeitinformation kann die Zeitdifferenz zwischen Anforderung und Empfang einer Zeitinformation gemessen werden, um daraus einen Schätzwert für die Laufzeit der Zeitinformation vom Zeitinformationsserver zur betreffenden Basisstation zu bestimmen.

Unter der Annahme, daß die Laufzeit der Anforderung annähernd mit der Laufzeit der Zeitinformation übereinstimmt, ergibt sich die Laufzeit der Zeitinformation als die Hälfte der gemessenen Zeitdifferenz. Die Genauigkeit des Schätzwerts für die Laufzeit einer Zeitinformation kann erhöht werden, indem der Schätzwert aus einem Mittelwert von im Rahmen mehrerer Anfragen gemessenen Zeitdifferenzen oder daraus abgeleiteten Größen bestimmt wird. Auf diese Weise können Laufzeitschwankungen der über das Lokale Netz übertragenen Daten ausgeglichen werden. Der ermittelte Schätzwert für die Laufzeit einer Zeitinformation kann beim Justieren des Zeittaktgebers korrigierend berücksichtigt werden.

Die Häufigkeit mit der Zeitinformationen von einer Basisstation angefordert werden, kann sich nach unterschiedlichen Kriterien richten. So z.B. nach der Genauigkeit des Zeittaktgebers der Basisstation, nach der Variationsbreite der zwischen Anfrage und Empfang von Zeitinformationen gemessenen Zeitdifferenzen und/oder nach der Größe eines bei einem vorhergehenden Justieren des Zeittaktgebers festgestellten Fehlstandes des Zeittaktgebers. Vorzugsweise können die Zeitinformationen um so häufiger angefordert werden, je geringer die Genauigkeit des Zeittaktgebers und je größer die Variationsbreite der gemessenen Zeitdifferenzen und der festgestellte Fehlstand des Zeittaktgebers ist.

Nach einer weiteren vorteilhaften Weiterbildung der Erfindung kann ein über das Lokale Netz empfangener Datenstrom in einem nach dem Durchlaufprinzip ("first-in-first-out", FIFO) arbeitenden Eingangspufferspeicher gepuffert werden, aus dem Datenelemente des Datenstroms in einem durch den Zeittaktgeber bestimmten Zeittakt zur Weiterverarbeitung ausgelesen werden. Abhängig vom Füllstand des Eingangspufferspeichers kann sodann die Taktfrequenz des Zeittaktgebers nachgeregelt werden. Unter der Voraussetzung, daß der über das Lokale Netz empfangene Datenstrom zumindest im zeitlichen Mittel mit einer durch einen Taktgeber des Datenstromsenders vorgegebenen Datenrate gesendet wird, kann so der Zeittaktgeber der Basisstation mit dem Taktgeber des Datenstromsenders im zeitlichen Mittel synchronisiert werden. Um kurzfristige Laufzeitschwankungen von Datenelementen des Datenstroms auszugleichen, kann ein aus dem Füllstand abgeleitetes Taktfrequenz-Regelungssignal dem Zeittaktgeber über ein Integrierglied zugeleitet werden.

Zur Taktfrequenzregelung kann vorzugsweise ein Datenstrom von über das Lokale Netz empfangenen und an ein mobiles Endgerät zu sendenden Kommunikationsdaten, wie z.B. Sprachdaten, genutzt werden. Da Kommunikationsdaten und insbesondere Sprachdaten bei bestehender Verbindung häufig mit einer genau eingehaltenen, am Zeittakt des Senders der Kommunikationsdaten orientierten Übertragungsrate übertragen werden, läßt sich die Taktfrequenz des Zeittaktgebers anhand empfangener Kommunikations- bzw. Sprachdaten besonders genau stabilisieren.

Ein Ausführungsbeispiel der Erfindung wird nachfolgend anhand der Zeichnung näher erläutert.

Dabei zeigen jeweils in schematischer Darstellung
- Figur 1: ein mobiles Kommunikationsnetz mit zwei über ein Lokales Netz an eine Vermittlungseinrichtung angekoppelten Basisstationen und
- Figur 2: eine detailliertere Darstellung einer der an das Lokale Netz angeschlossenen Basisstationen.

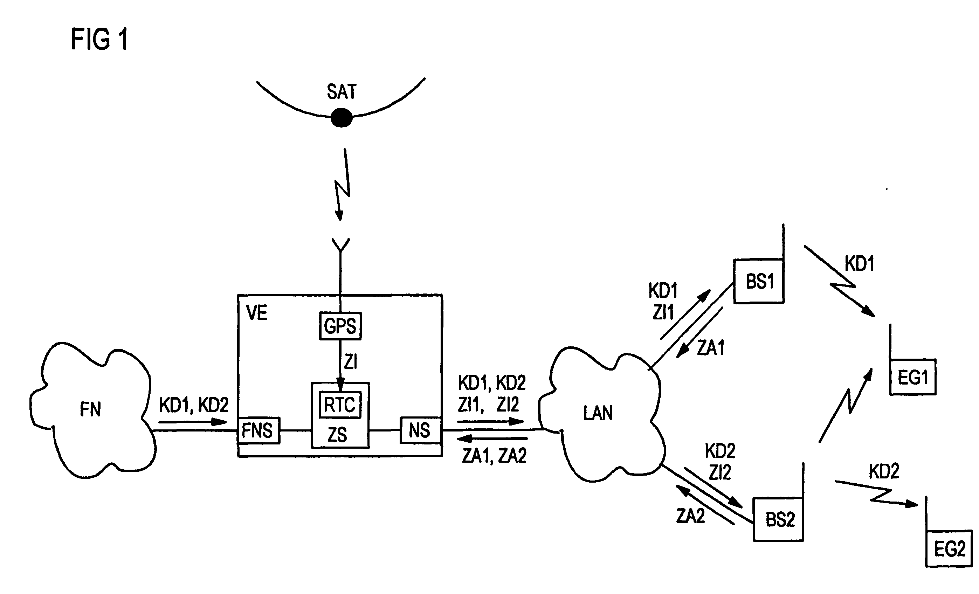

In Figur 1 ist ein mobiles Kommunikationsnetz mit einer an ein Festnetz FN angeschlossenen Vermittlungseinrichtung VE und zwei über ein Lokales Netz LAN mit der Vermittlungseinrichtung VE gekoppelten Basisstationen BS1 und BS2 schematisch dargestellt. Die Basisstationen BS1 und BS2 sind im vorliegenden Ausführungsbeispiel als DECT-Basisstationen (digital European cordless telephone) realisiert. Während über die Basisstation BS1 eine drahtlose Verbindung zu einem mobilen Endgerät EG1 aufgebaut ist, verläuft über die Basisstation BS2 eine drahtlose Verbindung zu einem mobilen Endgerät EG2. Das mobile Endgerät EG1 steht außerdem mit der zur Basisstation BS1 benachbarten Basisstation BS2 in Funkverbindung, um einen Wechsel der Verbindungsführung (handover) von der Basisstation BS1 zur Basisstation BS2 vorzubereiten. Die Funkverbindungen sind im vorliegenden Ausführungsbeispiel jeweils durch einen stilisierten Blitz angedeutet.

Die Vermittlungseinrichtung VE ist über eine Festnetzschnittstelle FNS mit dem Festnetz FN und über eine Netzschnittstelle NS mit dem Lokalen Netz LAN verbunden. Die Vermittlungseinrichtung VE weist weiterhin eine mit den Netzschnittstellen FNS und NS verbundene zentrale Steuerung ZS mit einer Echtzeituhr RTC sowie einen GPS(Global Positioning System)-Empfänger GPS zum Empfangen einer Weltzeitinformation von einem Satelliten SAT auf. Vom GPS-Empfänger wird die Echtzeituhr RTC durch eine in regelmäßigen Zeitabständen erfolgende Übermittlung von aktuellen Zeitinformationen ZI justiert.

Das Lokale Netz LAN, das z.B. als Ethernet, Token Ring, Token Bus oder FDDI realisiert sein kann, unterstützt eine paketorientierte Datenübertragung. An das Lokale Netz LAN können neben Kommunikationseinrichtungen auch Datenverarbeitungseinrichtungen (nicht dargestellt) angekoppelt sein. Im vorliegenden Ausführungsbeispiel dient das Lokale Netz LAN zum Übertragen sowohl aller Kommunikationsdaten als auch aller Steuerdaten zwischen der Vermittlungseinrichtung VE und den Basisstationen BS1 und BS2. Da ein Lokales Netz auf sehr einfache Weise erweitert und um weitere Kommunikations- und/oder Datenverarbeitungseinrichtungen ergänzt werden kann, läßt sich ein derartig realisiertes mobiles Kommunikationsnetz sehr flexibel unterschiedlichsten Anforderungen anpassen.

Im vorliegenden Ausführungsbeispiel werden im Rahmen von aus dem Festnetz FN zu den mobilen Endgeräten EG1 und EG2 führenden Verbindungen Kommunikationsdaten KD1 und KD2, z.B. Sprachdaten, aus dem Festnetz FN zur Vermittlungseinrichtung VE übertragen. In dieser werden die über die Festnetzschnittstelle FNS empfangenen Kommunikationsdaten KD1, KD2 von der zentralen Steuerung ZS jeweils mit einer die Basisstation BS1 bzw. BS2 im lokalen Netz LAN identifizierenden Adressinformation versehen und über die Netzschnittstelle NS in das lokale Netz LAN übertragen. Aus diesem empfangen die Basisstationen BS1 und BS2 die jeweils an sie selbst adressierten Kommunikationsdaten; d.h. die Basisstation BS1 empfängt die Kommunikationsdaten KD1 und die Basisstation BS2 die Kommunikationsdaten KD2. Die Basisstationen BS1 bzw. BS2 übermitteln die empfangenen Kommunikationsdaten KD1 bzw. KD2 anschließend eingebettet in DECT-Zeitrahmen, drahtlos zu den mobilen Endgeräten EG1 bzw. EG2.

Um bei bestehender Verbindung ein "seamless handover" für ein mobiles Endgerät, hier EG1, zwischen zwei benachbarten Basisstationen, hier BS1 und BS2, zu ermöglichen, müssen diese gemäß dem DECT-Standard eine Frequenzgenauigkeit von +/- 10⁻³% einhalten. Außerdem müssen die einer Datenübertragung zu einem mobilen Endgerät zugrundeliegenden DECT-Zeitrahmen der Basisstationen BS1 und BS2 mit einer Toleranz von 2 µs zueinander synchron sein. Um die Basisstationen BS1 und BS2 zueinander zu synchronisieren, wird jede der Basisstationen BS1 und BS2 für sich mit einer zentralen Zeitgebereinrichtung, hier der Echtzeituhr RTC der Vermittlungseinrichtung VE synchronisiert. Die Synchronisierung erfolgt dabei über das Lokale Netz LAN. Die Basisstationen BS1 und BS2 senden dazu jeweils eine Zeitanforderungsmeldung ZA1 bzw. ZA2, z.B. gemäß dem sogenannten "Network Time Protokoll" (NTP), über das Lokale Netz LAN zur Vermittlungseinrichtung VE. Diese wird durch die empfangenen Zeitanforderungsmeldungen ZA1, ZA2 dazu veranlaßt, jeweils eine aktuelle Zeitinformation ZI1 bzw. ZI2 von der Echtzeituhr RTC abzufragen und anschließend mit einer die Basisstation BS1 bzw. BS2 identifizierenden Adressinformation versehen über das Lokale Netz LAN zu der jeweils addressierten Basisstation BS1 bzw. BS2 zu übertragen. Die Vermittlungseinrichtung VE erfüllt damit die Funktion eines Zeitinformationsservers im Lokalen Netz LAN.

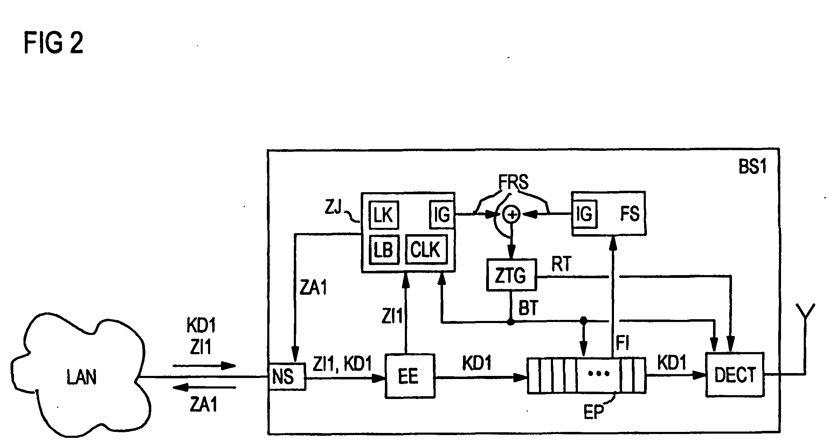

Figur 2 zeigt die Basisstation BS1 in detaillierterer Darstellung. Die Basisstation BS1, die über eine Netzwerkschnittstelle NS an das Lokale Netz LAN gekoppelt ist, weist als weitere Funktionskomponenten eine Empfangseinrichtung EE, einen Eingangspufferspeicher EP, einen Zeittaktgeber ZTG, eine Zeittaktjustiereinrichtung ZJ, eine Frequenzsteuerung FS, sowie ein DECT-Funkteil DECT auf. Die Zeittaktjustiereinrichtung ZJ verfügt ihrerseits über eine interne Uhr CLK, eine Laufzeitbestimmungseinrichtung LB, eine Laufzeitkorrektureinrichtung LK sowie ein Integrierglied IG. Aus Gründen der Übersichtlichkeit sind weitere, zum Verständnis der Erfindung nicht unmittelbar beitragende Funktionskomponenten der Basisstation BS1 nicht dargestellt. Die dargestellten Funktionskomponenten können jeweils auch mit Hilfe von Softwaremodulen realisiert sein, die auf einem Systemprozessor der Basisstation BS1 ablaufen.

Der Zeittaktgeber ZTG stellt sowohl einen Bittakt BT als auch einen mit diesem synchronisierten Rahmentakt RT bereit. Die Frequenz des Bittaktes BT und damit die Frequenz des Rahmentaktes RT ist dabei steuerbar. Während der Bittakt BT das elementare Zeitmaß für die Steuervorgänge der Basisstation BS1 darstellt, gibt der Rahmentakt RT ein Zeitmaß für die DECT-Zeitrahmen vor. Der Bittakt BT wird im vorliegenden Ausführungsbeispiel der Zeittaktjustiereinrichtung ZJ, dem Eingangspufferspeicher EP sowie dem DECT-Funkteil DECT zugeführt. In der Zeittaktjustiereinrichtung ZJ wird der Bittakt BT insbesondere zur Taktung der internen Uhr CLK genutzt. Dem DECT-Funkteil DECT wird zusätzlich zum Bittakt BT der Rahmentakt RT zugeleitet, der das Zeitraster für die vom DECT-Funkteil DECT gesendeten DECT-Zeitrahmen vorgibt.

Zur Synchronisierung des Zeittaktgebers ZTG mit dem Zeitmaß der Vermittlungseinrichtung VE sendet die Zeittaktjustiereinrichtung ZJ über die Netzschnittstelle NS die Zeitanforderungsmeldung ZA1 über das lokale Netz LAN zur Vermittlungseinrichtung VE. Der Absendezeitpunkt der Zeitanforderungsmeldung ZA1 wird dabei mittels der internen Uhr CLK registriert und gespeichert. Durch die Zeitanforderungsmeldung ZA1 wird die Vermittlungseinrichtung VE, wie oben bereits ausgeführt, dazu veranlaßt, die Zeitinformation ZI1 über das Lokale Netz LAN zur Basisstation BS1 zu übertragen. Die Zeitinformation ZI1 wird von der Netzschnittstelle NS der Basisstation BS1 zur Empfangseinrichtung EE weitergeleitet, wo die Zeitinformation ZI1 aus einem über das Lokale Netz LAN empfangenen, auch die Kommunikationsdaten KD1 enthaltenden Datenstrom extrahiert wird. Die extrahierte Zeitinformation ZI1 wird von der Empfangseinrichtung EE zur Zeittaktjustiereinrichtung ZJ weitergeleitet, durch die der Empfangszeitpunkt der Zeitinformation ZI1 anhand der internen Uhr CLK bestimmt und der Zeitinformationsinhalt der Zeitinformation ZI1 ausgewertet wird. Durch die Laufzeitbestimmungseinrichtung LB wird anschließend die Laufzeit der Zeitinformation ZI1 im Lokalen Netz LAN als die Hälfte der Zeitdifferenz zwischen dem festgestellten Empfangszeitpunkt der Zeitinformation ZI1 und dem gespeicherten Absendezeitpunkt der Zeitanforderungsmeldung ZA1 abgeschätzt.

Zur Erhöhung der Genauigkeit der Laufzeitbestimmung und zum Ausgleich kurzfristiger Laufzeitschwankungen wird der für die Laufzeit erhaltene Wert mit früher bestimmten Werten für die Laufzeit gemittelt. Vorzugsweise wird ein gleitender Mittelwert bestimmt. Gegebenenfalls kann auch ein Zeitstempel der Zeitinformation ZI1 in die Laufzeitbestimmung einbezogen werden.

Die durch den Zeitinformationsinhalt der Zeitinformation ZI1 angegebene Zeit wird anschließend durch die Laufzeitkorrektureinrichtung LK um die vorher bestimmte Laufzeit der Zeitinformation ZI1 korrigiert. Die korrigierte Zeit wird daraufhin mit der von der internen Uhr CLK zum Empfangszeitpunkt der Zeitinformation ZI1 angegebenen Zeit verglichen. Abhängig vom Vergleichsergebnis wird sodann ein Frequenzregelungssignal FRS zur Steuerung der Taktfrequenz des Zeittaktgenerators ZTG gebildet. Das Frequenzregelungssignal FRS wird von der Zeittaktjustiereinrichtung ZJ über das zeitliche Integrierglied IG ausgegeben, dessen Zeitkonstante so bemessen ist, daß im Lokalen Netz LAN typischerweise auftretende Laufzeitschwankungen ausgeglichen werden.

Vorzugsweise können durch die Zeittaktjustiereinrichtung ZJ bei Auftreten vergleichsweise großer Abweichungen zwischen der internen Uhr CLK und der Echtzeituhr RTC der Vermittlungseinrichtung VE, Zeitinformationen in kürzeren Zeitabständen von der Vermittlungseinrichtung VE angefordert werden.

In den Zeitintervallen zwischen einem jeweiligen Empfang einer Zeitinformation wird die Taktfrequenz des Zeittaktgebers ZTG mit Hilfe der ebenfalls über das Lokale Netz LAN empfangenen Kommunikationsdaten KD1 stabilisiert. Die Kommunikationsdaten KD1 werden dazu von der Empfängereinrichtung EE dem Eingang des Eingangspufferspeichers EP zugeführt. Dieser ist als sogenannter Durchlaufspeicher realisiert, aus dem zwischengespeicherte Daten in der zeitlichen Reihenfolge ihres Einspeicherns ausgelesen werden. Ein Durchlaufspeicher wird häufig auch als "first-in-first-out"-Speicher oder "FIFO" bezeichnet. Die im Eingangspufferspeicher EP zwischengespeicherten Kommunikationsdaten KD1 werden aus diesem nach Maßgabe des vom Zeittaktgeber ZTG zugeführten Bittaktes BT ausgelesen und dem DECT-Funkteil DECT zugeführt. Von diesem werden die Kommunikationsdaten KD1 schließlich drahtlos zum mobilen Endgerät EG1 übertragen.

In der Regel werden Kommunikationsdaten und insbesondere Sprachdaten von einer Vermittlungseinrichtung zu einem Endgerät mit konstanter, streng am Zeittakt der Vermittlungseinrichtung orientierter Datenrate gesendet. Trotz eventueller Laufzeitschwankungen, denen solche mit konstanter Datenrate gesendete Kommunikationsdaten unterliegen, treffen diese Kommunikationsdaten bei einem Empfänger zumindest im zeitlichen Mittel mit derselben Datenrate ein. Das zeitliche Mittel der Datenrate empfangener Kommunikationsdaten kann somit genutzt werden, einen Empfänger dieser Kommunikationsdaten mit dem Zeittakt des Senders zu synchronisieren.

Im vorliegenden Ausführungsbeispiel werden die mit konstanter Datenrate von der Vermittlungseinrichtung VE gesendeten Kommunikationsdaten KD1, KD2 von den Basisstationen BS1, BS2 dazu verwendet, die Taktfrequenz ihres jeweiligen Zeittaktgebers ZTG während der Zeitintervalle zwischen einzelnen Abfragen von Zeitinformationen zu stabilisieren. In der Basisstation BS1 wird zu diesem Zweck in regelmäßigen Zeitabständen der aktuelle Füllstand des Eingangspufferspeichers EP, d.h. die Grenze bis zu der der Eingangspufferspeicher EP mit Kommunikationsdaten KD1 angefüllt ist, erfaßt und in Form einer Füllstandsinformation FI zur Frequenzsteuerung FS übertragen. Die Frequenzsteuerung FS bildet abhängig von der Füllstandsinformation FI ein Frequenzregelungssignal FRS, das über ein Integrierglied IG ausgegeben und mit dem von der Zeittaktjustiereinrichtung ZJ gebildeten Frequenzregelungssignal zur Regelung der Taktfrequenz des Zeittaktgebers ZTG kombiniert wird. Die Zeitkonstante des Integriergliedes IG der Frequenzsteuerung FS ist so bemessen, daß im Lokalen Netz LAN typischerweise auftretende Laufzeitschwankungen der Kommunikationsdaten KD1 ausgeglichen werden. Die Integrierglieder IG der Frequenzsteuerung FS bzw. der Zeittaktjustiereinrichtung ZJ können beispielsweise mit Hilfe einer Digitalschaltung zur Bildung gleitender Mittelwerte realisiert sein. Bei überdurchschnittlich hohem Füllstand des Eingangspufferspeichers EP wird von der Frequenzsteuerung FS ein Frequenzregelungssignal FRS zur Erhöhung der Taktfrequenz des Zeittaktgenerators ZTG gebildet, während bei unterdurchschnittlichem Füllstand des Eingangspufferspeichers EP ein Frequenzregelungssignal zur Verringerung der Taktfrequenz gebildet wird. Die von der Zeittaktjustiereinrichtung ZJ und der Frequenzsteuerung FS ausgegebenen Frequenzregelungssignale FRS können jeweils mit vorgegebenen Gewichtsfaktoren kombiniert dem Zeittaktgeber ZTG zugeführt werden. Vorzugsweise erhält dabei das von der Zeittaktjustiereinrichtung ZJ gebildete Frequenzregelungssignal FRS ein höheres Gewicht als das von der Frequenzsteuerung FS gebildete. Aufgrund der zusätzlichen Stabilisierung der Taktfrequenz des Zeittaktgebers ZTG anhand des Füllstandes des Eingangspufferspeichers EP kann als Zeittaktgeber ZTG auch ein relativ preiswerter Quarzgenerator ohne aufwendige Temperaturstabilisierung eingesetzt werden, um Synchronität auch während vergleichsweise langer Zeitintervalle zwischen einzelnen Zeitabfragen zu gewährleisten.

Obwohl die Übertragung der Zeitinformationen ZI1, ZI2 und der Kommunikationsdaten KD1, KD2 über das Lokale Netz LAN nicht zeittransparent ist, erlaubt die Erfindung eine für "seamless handover"-Vorgänge ausreichende Synchronisierungsgenauigkeit für benachbarte Basisstationen BS1 und BS2. Die hohe Synchronisierungsgenauigkeit wird insbesondere dadurch begünstigt, daß sowohl die Laufzeiten als auch die Laufzeitschwankungen von Zeitinformationen ZI1, ZI2 bzw. Kommunikationsdaten KD1, KD2 bei benachbarten Basisstationen nur geringfügig differieren.

Im vorliegenden Ausführungsbeispiel wird die Synchronisationsgenauigkeit zusätzlich durch die Verwendung mehrerer Frequenzregelungsmechanismen und den Ausgleich von Laufzeitschwankungen durch die Integrierglieder IG erhöht.

Um die für ein "seamless handover" erforderliche Synchronisierungsgenauigkeit der Basisstationen BS1 und BS2 auch in größeren Lokalen Netzen LAN zu gewährleisten, können Netzwerkelemente des Lokalen Netzes LAN, wie z.B. "Repeater" und/oder "Router", so angeordnet werden, daß die jeweilige Anzahl der zwischen die Vermittlungseinrichtung VE und die jeweilige Basisstation BS1 bzw. BS2 geschalteten und der zwischen die Basisstationen BS1 und BS2 geschalteten Netzwerkelemente eine jeweils vorgegebene Anzahl nicht überschreitet.

## Patentansprüche

1. Verfahren zum Synchronisieren von Basisstationen (BS1, BS2) eines mobilen Kommunikationsnetzes, bei dem
a) den Basisstationen (BS1, BS2) Zeitinformationen (ZI1, ZI2) über ein paketorientiertes Lokales Netz (LAN) übermittelt werden,
b) ein Zeittaktgeber (ZTG) einer jeweiligen, eine Zeitinformation (ZI1, ZI2) empfangenden Basisstation (BS1, BS2) anhand des Empfangszeitpunktes sowie eines Zeitinformationsinhaltes der Zeitinformation (ZI1, ZI2) justiert wird, und
c) anhand von Signalen (RT, BT) des Zeittaktgebers (ZTG) ein Senden von Funktionsabläufe der jeweiligen Basisstation (BS1, BS2) Funk-betreffenden Zeitrahmen gesteuert wird.

2. Verfahren nach Anspruch 1,
**dadurch gekennzeichnet,**
**daß** der Zeittaktgeber (ZTG) einer Basisstation (BS1, BS2) durch Nachregeln seiner Taktfrequenz und/oder Phasenlage justiert wird.

3. Verfahren nach Anspruch 1 oder 2,
**dadurch gekennzeichnet,**
**daß** der Zeittaktgeber (ZTG) einer Basisstation (BS1, BS2) durch Auslassen oder Einfügen von Zeittakten justiert wird.

4. Verfahren nach einem der vorhergehenden Ansprüche,
**dadurch gekennzeichnet,**
**daß** eine Zeitinformation (ZI1, ZI2) durch eine Basisstation (BS1, BS2) über das Lokale Netz (LAN) von einem Zeitinformationsserver (VE) angefordert wird.

5. Verfahren nach Anspruch 4,
**dadurch gekennzeichnet,**
**daß** Anforderung und Übermittlung der Zeitinformation (ZI1, ZI2) gemäß einem standardisierten Netzwerkprotokoll erfolgt.

6. Verfahren nach Anspruch 4 oder 5,
**dadurch gekennzeichnet,**
**daß** die Zeitdifferenz zwischen Anforderung und Empfang der Zeitinformation (ZI1, ZI2) gemessen wird,
anhand der gemessenen Zeitdifferenz ein Schätzwert für die Laufzeit der Zeitinformation (ZI1, ZI2) vom Zeitinformationsserver (VE) zur Basisstation (BS1, BS2) ermittelt wird und
der Zeittaktgeber (ZTG) unter Verwendung des ermittelten Schätzwertes für die Laufzeit der Zeitinformation (ZI1, ZI2) justiert wird.

7. Verfahren nach Anspruch 6,
**dadurch gekennzeichnet,**
**daß** die Zeitdifferenz mittels des Zeittaktgebers (ZTG) der Basisstation (BS1, BS2) gemessen wird.

8. Verfahren nach Anspruch 6 oder 7,
**dadurch gekennzeichnet,**
**daß** zur Bestimmung des Schätzwertes für die Laufzeit einer Zeitinformation (ZI1, ZI2) über mehrere gemessene Zeitdifferenzen oder daraus abgeleitete Größen gemittelt wird.

9. Verfahren nach einem der Ansprüche 4 bis 8,
**dadurch gekennzeichnet,**
**daß** Zeitinformationen (ZI1, ZI2) durch eine Basisstation (BS1, BS2) in regelmäßigen Zeitabständen über das Lokale Netz (LAN) angefordert werden.

10. Verfahren nach einem der Ansprüche 6 bis 8,
**dadurch gekennzeichnet,**
**daß** Zeitinformationen (ZI1, ZI2) durch eine Basisstation (BS1, BS2) über das Lokale Netz (LAN) in Zeitabständen angefordert werden, die davon abhängen, wie stark die gemessenen Zeitdifferenzen variieren.

11. Verfahren nach einem der vorhergehenden Ansprüche,
**dadurch gekennzeichnet,**
**daß** ein von einer Basisstation (BS1, BS2) über das Lokale Netz (LAN) empfangener Datenstrom (KD1, KD2) in einem nach dem Durchlaufprinzip arbeitenden Eingangspufferspeicher (EP) gepuffert wird, aus dem Datenelemente des Datenstroms (KD1, KD2) in einem durch den Zeittaktgeber (ZTG) bestimmten Zeittakt (BT) zur Weiterverarbeitung ausgelesen werden,
**daß** der Füllstand des Eingangspufferspeichers (EP) erfaßt wird, und
**daß** die Taktfrequenz des Zeittaktgebers (ZTG) abhängig vom erfaßten Füllstand nachgeregelt wird.

12. Verfahren nach Anspruch 11,
**dadurch gekennzeichnet,**
**daß** der im Eingangspufferspeicher (EP) zu puffernde Datenstrom über das Lokale Netz (LAN) empfangene und an ein mobiles Endgerät (EG1, EG2) zu sendende Kommunikationsdaten (KD1, KD2) umfaßt.

13. Verfahren nach Anspruch 11 oder 12,
**dadurch gekennzeichnet,**
**daß** die Justierung des Zeittaktgebers (ZTG) anhand einer empfangenen Zeitinformation (ZI1, ZI2) gegenüber der Justierung anhand des erfaßten Füllstandes priorisiert ist.

14. Verfahren nach einem der vorhergehenden Ansprüche,
**dadurch gekennzeichnet,**
**daß** eine Basisstation (BS1, BS2) über das Lokale Netz (LAN) Zeitinformationen von mehreren Zeitinformationsservern empfängt und zur Justierung des Zeittaktgebers (ZTG) verwendet.

15. Anordnung zum Synchronisieren von Basisstationen (BS1, BS2) eines mobilen Kommunikationsnetzes, bei dem die Basisstationen (BS1, BS2) an ein paketorientiertes Lokales Netz (LAN) gekoppelt sind und jeweils Mittel zum Synchronisieren eines Zeitmaßes einer jeweiligen Basisstation anhand einer über das Lokale Netz (LAN) übermittelten Zeitinformation (ZI1, ZI2) aufweisen.

16. Anordnung nach Anspruch 15,
**gekennzeichnet durch**
einen an das Lokale Netz gekoppelten Zeitinformationsserver (VE) mit einer Zeitgebereinrichtung (RTC) zum Übertragen von Zeitinformationen (ZI1, ZI2) über das Lokale Netz (LAN) zu den Basisstationen (BS1, BS2), wobei die Basisstationen (BS1, BS2) jeweils
- einen Zeittaktgeber (ZTG),
- eine Zeitinformations-Empfangseinrichtung (EE) zum Extrahieren einer Zeitinformation (ZI1, ZI2) aus einem über das Lokale Netz (LAN) empfangenen Datenstrom,
- eine Zeittaktjustiereinrichtung (ZJ) zum Justieren des Zeittaktgebers (ZTG) anhand des Empfangszeitpunktes und eines Zeitinformationsinhaltes einer empfangenen Zeitinformation (ZI1, ZI2) sowie
- eine Steuereinrichtung (DECT) zum zeitlichen Steuern von Funktionsabläufen, die ein Senden von Funk-Zeitrahmen betreffen, anhand von Signalen (RT, BT) des Zeittaktgebers (ZTG) aufweisen.

17. Anordnung nach Anspruch 16,
**dadurch gekennzeichnet,**
**daß** der Zeitinformationsserver (VE) eine Satellitennavigations-Empfängereinrichtung (GPS) zum Empfangen einer Weltzeitinformation und zum Vorgeben eines Zeitmaßes für den Zeitinformationsserver (VE) anhand der empfangenen Weltzeitinformation aufweist.

18. Anordnung nach Anspruch 16 oder 17,
**dadurch gekennzeichnet,**
**daß** die Basisstationen (BS1, BS2) jeweils eine Zeitabfrageeinrichtung (ZJ) zum Anfordern einer Zeitinformation (ZI1, ZI2) über das Lokale Netz (LAN) aufweisen.

19. Anordnung nach Anspruch 18,
**dadurch gekennzeichnet,**
**daß** die Basisstationen (BS1, BS2) jeweils eine Zeitmeßeinrichtung (CLK) zum Messen der Zeitdifferenz zwischen Anforderung und Empfang einer Zeitinformation (ZI1, ZI2), eine Laufzeitbestimmungseinrichtung (LB) zum Ermitteln eines Schätzwertes für die Laufzeit der Zeitinformation (ZI1, ZI2) vom Zeitinformationsserver (VE) zur jeweiligen Basisstation (BS1, BS2) anhand der gemessenen Zeitdifferenz, sowie
eine Laufzeitkorrektureinrichtung (LK) zum Korrigieren der Zeitinformation (ZI1, ZI2) um deren abgeschätzte Laufzeit aufweisen.

20. Anordnung nach Anspruch 19,
**dadurch gekennzeichnet,**
**daß** die Zeitmeßeinrichtung (CLK) mittels eines Signale (BT) des Zeittaktgebers (ZTG) zählenden Zählers realisiert ist.

21. Anordnung nach einem der Ansprüche 16 bis 20,
**dadurch gekennzeichnet,**
**daß** die Basisstationen (BS1, BS2) jeweils einen Eingangspufferspeicher (EP) zum Puffern eines über das Lokale Netz (LAN) empfangenen Datenstroms (KD1, KD2),
eine Füllstandserfassungseinrichtung zum Erfassen des Füllstandes des Eingangspufferspeichers (EP) sowie eine Taktfrequenz-Regelungseinrichtung (FS) zum Nachregeln der Taktfrequenz des Zeittaktgebers (ZTG) in Abhängigkeit vom erfaßten Füllstand aufweisen.

22. Anordnung nach einem der Ansprüche 16 bis 21,
**dadurch gekennzeichnet,**
**daß** die Basisstationen (BS1, BS2) jeweils eine PLL-Schaltung zum Regeln der Taktfrequenz des Zeittaktgebers (ZTG) aufweisen.

23. Anordnung nach einem der Ansprüche 15 bis 22,
**dadurch gekennzeichnet,**
**daß** die Basisstationen (BS1, BS2) im Lokalen Netz (LAN) benachbart sind.

## Claims

1. Method for synchronization of base stations (BS1, BS2) in a mobile communications network, in which
a) time information (ZI1, ZI2) is transmitted via a packet-oriented local area network (LAN) to the base stations (BS1, BS2),
b) a clock transmitter (ZTG) for a respective base station (BS1, BS2) which receives time information (ZI1, ZI2) is adjusted on the basis of the reception time and on the time information content of the time information (ZI1, ZI2) and
c) the transmission of radio time frames, which relate to functional sequences, to the respective base station (BS1, BS2) is controlled by signals (RT, BT) from the clock transmitter (ZTG).

2. Method according to Claim 1,
**characterized**
**in that** the clock transmitter (ZTG) of a base station (BS1, BS2) is adjusted by readjusting its clock frequency and/or phase.

3. Method according to Claim 1 or 2,
**characterized**
**in that** the clock transmitter (ZTG) of a base station (BS1, BS2) is adjusted by omitting or inserting clock pulses.

4. Method according to one of the preceding claims,
**characterized**
**in that** time information (ZI1, ZI2) is requested by a base station (BS1, BS2) via the local area network (LAN) from a time information server (VE).

5. Method according to Claim 4,
**characterized**
**in that** the request for and transmission of the time information (ZI1, ZI2) are carried out in accordance with a standardized network protocol.

6. Method according to Claim 4 or 5,
**characterized**
**in that** the time difference between the request for and the reception of the time information (ZI1, ZI2) is measured,
an estimated value for the propagation time of the time information (ZI1, ZI2) from the time information server (VE) to the base station (BS1, BS2) is determined from the measured time difference, and
the clock transmitter (ZTG) is adjusted using the determined estimated value of propagation time of the time information (ZI1, ZI2).

7. Method according to Claim 6,
**characterized**
**in that** the time difference is measured by means of the clock transmitter (ZTG) in the base station (BS1, BS2).

8. Method according to Claim 6 or 7,
**characterized**
**in that** averaging is carried out over a number of measured time differences, or variables defined from such differences, in order to determine the estimated value of propagation time of time information (ZI1, ZI2).

9. Method according to one of Claims 4 to 8,
**characterized**
**in that** time information (ZI1, ZI2) is requested by a base station (BS1, BS2) at regular time intervals via the local area network (LAN).

10. Method according to one of Claims 6 to 8,
**characterized**
**in that** time information (ZI1, ZI2) is requested by a base station (BS1, BS2) via the local area network (LAN) at time intervals which are dependent on the severity with which the measured time differences vary.

11. Method according to one of the preceding claims,
**characterized**
**in that** a data stream (KD1, KD2), which is received via the local area network (LAN) from a base station (BS1, BS2) is temporarily stored in an input buffer store (EP) which operates on the first-in-first-out principle, from which data elements of the data stream (KD1, KD2) are read for further processing using a clock cycle governed by the clock transmitter (ZTG),
**in that** the filling level of the input buffer store (EP) is recorded, and
**in that** the clock frequency of the clock transmitter (ZTG) is readjusted on the basis of the recorded filling level.

12. Method according to Claim 11,
**characterized**
**in that** the data stream to be temporarily stored in the input buffer store (EP) comprises communications data (KD1, KD2) which is being received via the local area network (LAN) and is to be transmitted to a mobile terminal (EG1, EG2).

13. Method according to Claim 11 or 12,
**characterized**
**in that** the adjustment of the clock transmitter (ZTG) on the basis of received time information (ZI1, ZI2) is given priority over the adjustment based on the recorded filling level.

14. Method according to one of the preceding claims,
**characterized**
**in that** a base station (BS1, BS2) receives time information from a number of time information servers via the local area network (LAN), and uses this for adjustment of the clock transmitter (ZTG).

15. Arrangement for synchronization of base stations (BS1, BS2) in a mobile communications network, in which the base stations (BS1, BS2) are coupled to a packet-oriented local area network (LAN), and
each have means for synchronization of a time measure for a respective base station on the basis of time information (ZI1, ZI2) which is transmitted via the local area network (LAN).

16. Arrangement according to Claim 15,
**characterized by**
a time information server (VE), which is coupled to the local area network, having a timer device (RTC) for transmitting time information (ZI1, ZI2) via the local area network (LAN) to the base stations (BS1, BS2), with the base stations (BS1, BS2) each having
- a clock transmitter (ZTG),
- a time information receiving device (EE) for extracting time information (ZI1, ZI2) from a data stream which has been received via the local area network (LAN),
- a clock adjustment device (ZJ) for adjusting the clock transmitter (ZTG) on the basis of the reception time and the time information content of received time information (ZI1, ZI2) and
- a control device (DECT) for controlling the timing of functional sequences, which relate to the transmission of radio time frames, on the basis of signals (RT, BT) from the clock transmitter (ZTG).

17. Arrangement according to Claim 16,
**characterized**
**in that** the time information server (VE) has a satellite navigation receiver device (GPS) for receiving world time information and for presetting a time measure for the time information server (VE) on the basis of the received world time information.

18. Arrangement according to Claim 16 or 17,
**characterized**
**in that** the base stations (BS1, BS2) each have a time checking device (ZJ) for requesting time information (ZI1, ZI2) via the local area network (LAN).

19. Arrangement according to Claim 18,
**characterized**
**in that** the base stations (BS1, BS2) each have a time measurement device (CLK) for measuring the time difference between a request for and reception of time information (ZI1, ZI2), a propagation time determination device (LB) for determining an estimated value of the propagation time of the time information (ZI1, ZI2) from the time information server (VE) to the respective base station (BS1, BS2) on the basis of the measured time difference, and
a propagation time correction device (LK) for correcting the time information (ZI1, ZI2) for its estimated propagation time.

20. Arrangement according to Claim 19,
**characterized**
**in that** the time measurement device (CLK) is in the form of a counter which counts signals (BT) from the clock transmitter (ZTG).

21. Arrangement according to one of Claims 16 to 20,
**characterized**
**in that** the base stations (BS1, BS2) each have an input buffer store (EP) for temporarily storing a data stream (KD1, KD2) which is received via the local area network (LAN),
a filling level recording device for recording the filling level of the input buffer store (EP), as well as a clock frequency control device (FS) for readjusting the clock frequency of the clock transmitter (ZTG) as a function of the recorded filling level.

22. Arrangement according to one of Claims 16 to 21,
**characterized**
**in that** the base stations (BS1, BS2) each have a PLL circuit for controlling the clock frequency of the clock transmitter (ZTG).

23. Arrangement according to one of Claims 15 to 22,
**characterized in that** the base stations (BS1, BS2) are adjacent in the local area network (LAN).

## Revendications

1. Procédé pour la synchronisation de stations de base (BS1, BS2) d'un réseau de communication mobile, dans lequel
a) des informations de temps (ZI1, ZI2) sont transmises aux stations de base (BS1, BS2) au moyen d'un réseau (LAN) orienté paquet,
b) un générateur de rythme (ZTG) d'une station de base (BS1, BS2) respective recevant une information de temps (ZI1, ZI2) est ajusté à l'aide du moment de réception et d'un contenu de l'information de temps (ZI1, ZI2), et
c) un envoi de cadre de temps radio concernant des processus de fonction de la station de base respective (BS1, BS2) est commandé à l'aide de signaux (RT, BT) du générateur de rythme (ZTG).

2. Procédé selon la revendication 1,
**caractérisé**
**en ce que** le générateur de rythme (ZTG) d'une station de base (BS1, BS2) est ajusté par le réglage ultérieur de sa fréquence de rythme et/ou de sa position de phase.

3. Procédé selon la revendication 1 ou 2,
**caractérisé**
**en ce que** le générateur de rythme (ZTG) d'une station de base (BS1, BS2) est ajusté par l'omission ou l'insertion de temps de rythme.

4. Procédé selon l'une quelconque des revendications précédentes,
**caractérisé**
**en ce qu'**une information de temps (ZI1, ZI2) est demandée par une station de base (BS1, BS2) via le réseau local (LAN) à un serveur d'information de temps (VE).

5. Procédé selon la revendication 4,
**caractérisé**
**en ce que** la demande et la transmission de l'information de temps (ZI1, ZI2) s'effectuent selon un protocole de réseau standardisé.

6. Procédé selon la revendication 4 ou 5,
**caractérisé**
**en ce que** la différence de temps entre la demande et la réception de l'information de temps (ZI1, ZI2) est mesurée,
une valeur estimative pour le temps de propagation de l'information de temps (ZI1, ZI2) entre le serveur d'information de temps (VE) et la station de base (BS1, BS2) est déterminée à l'aide de la différence de temps mesurée et le générateur de rythme (ZTG) est ajusté avec l'utilisation de la valeur estimative déterminée pour le temps de propagation de l'information de temps (ZI1, ZI2).

7. Procédé selon la revendication 6,
**caractérisé**
**en ce que** la différence de temps est mesurée au moyen du générateur de rythme (ZTG) de la station de base (BS1, BS2).

8. Procédé selon la revendication 6 ou 7,
**caractérisé**
**en ce que** pour la détermination de la valeur estimative pour le temps de propagation d'une information de temps (ZI1, ZI2), on fait la moyenne sur plusieurs différences de temps mesurées ou grandeurs déduites de ces différences.

9. Procédé selon l'une quelconque des revendications 4 à 8,
**caractérisé**
**en ce que** des informations de temps (ZI1, ZI2) sont demandées par une station de base (BS1, BS2) à des intervalles de temps réguliers via le réseau local (LAN).

10. Procédé selon l'une quelconque des revendications 6 à 8,
**caractérisé**
**en ce que** des informations de temps (ZI1, ZI2) sont demandées par une station de base (BS1, BS2) via le réseau local (LAN) à des intervalles de temps qui dépendent de l'intensité de la variation des différences de temps mesurées.

11. Procédé selon l'une quelconque des revendications précédentes,
**caractérisé**
**en ce qu'**un flux de données (KD1, KD2) reçu d'une station de base (BS1, BS2) via le réseau local (LAN) est bufférisé dans une mémoire tampon d'entrée (EP) travaillant selon le principe de passage, de laquelle on extrait des éléments de données du flux de données (KD1, KD2) dans un rythme (BT) déterminé par le générateur de rythme (ZTG) pour le traitement ultérieur,
**en ce que** le niveau de remplissage de la mémoire tampon d'entrée (EP) est enregistré et
**en ce que** la fréquence de rythme du générateur de rythme (ZTG) est réglée en fonction du niveau de remplissage enregistré.

12. Procédé selon la revendication 11,
**caractérisé**
**en ce que** le flux de données à buffériser dans la mémoire tampon d'entrée (EP) comprend des données de communication (KD1, KD2) reçues par le réseau local (LAN) et à envoyer à un terminal (EG1, EG2) mobile.

13. Procédé selon la revendication 11 ou 12,
**caractérisé**
**en ce que** l'ajustage du générateur de rythme (ZTG) est mis en priorité à l'aide d'une information de temps (ZI1, ZI2) reçue par rapport à l'ajustage à l'aide du niveau de remplissage enregistré.

14. Procédé selon l'une quelconque des revendications précédentes,
**caractérisé**
**en ce qu'**une station de base (BS1, BS2) reçoit par le réseau local (LAN) des informations de temps de plusieurs serveurs d'information de temps et les utilise pour l'ajustage du générateur de rythme (ZTG).

15. Dispositif pour la synchronisation de stations de base (BS1, BS2) d'un réseau de communication mobile, dans lequel
les stations de base (BS1, BS2) sont couplées à un réseau local (LAN) orienté paquet et
présente respectivement des moyens pour la synchronisation d'une mesure de temps d'une station de base respective à l'aide d'une information de temps (ZI1, ZI2) transmise par le réseau local (LAN).

16. Dispositif selon la revendication 15,
**caractérisé par**
un serveur d'information de temps (VE) couplé au réseau local avec un générateur de temps (RTC) pour la transmission d'informations de temps (ZI1, ZI2) par le réseau local (LAN) aux stations de base (BS1, BS2), les stations de base (BS1, BS2) présentant chacune
- un générateur de rythme (ZTG),
- un dispositif de réception d'information de temps (EE) pour l'extraction d'une information de temps (ZI1, ZI2) d'un flux de données reçu par le réseau local (LAN),
- un dispositif d'ajustage de rythme (ZJ) pour l'ajustage du générateur de rythme (ZTG) à l'aide du moment de réception et d'un contenu d'une information de temps reçue (ZI1, ZI2) et
- un dispositif de commande (DECT) pour la commande dans le temps de déroulements de fonction, qui concernent une émission de cadres de temps radio, à l'aide de signaux (RT, BT) du générateur de rythme (ZTG).

17. Dispositif selon la revendication 16,
**caractérisé**
**en ce que** le serveur d'information de temps (VE) présente un système récepteur de navigation par satellite (GPS) pour la réception d'une information de temps universel et pour la prédéfinition d'une mesure de temps pour le serveur d'information de temps (VE) à l'aide de l'information de temps universel reçue.

18. Dispositif selon la revendication 16 ou 17,
**caractérisé**
**en ce que** les stations de base (BS1, BS2) présentent respectivement un dispositif de demande de temps (ZJ) pour la demande d'une information de temps (ZI1, ZI2) par le réseau local (LAN).

19. Dispositif selon la revendication 18,
**caractérisé**
**en ce que** les stations de base (BS1, BS2) présentent respectivement un appareil de mesure de temps (CLK) pour la mesure de la différence de temps entre la demande et la réception d'une information de temps (ZI1, ZI2), un appareil de détermination de temps de propagation (LB) pour la détermination d'une valeur estimative pour le temps de propagation de l'information de temps (ZI1, ZI2) du serveur d'information de temps (VE) à la station de base respective (BS1,BS2) à l'aide de la différence de temps mesurée, et
un dispositif de correction de temps de propagation (LK) pour la correction de l'information de temps (ZI1, ZI2) de son temps de propagation estimé.

20. Dispositif selon la revendication 19,
**caractérisé**
**en ce que** l'appareil de mesure de temps (CLK) est réalisé au moyen d'un compteur comptant des signaux (BT) du générateur de rythme (ZTG).

21. Dispositif selon l'une quelconque des revendications 16 à 20,
**caractérisé**
**en ce que** les stations de base (BS1, BS2) présentent respectivement une mémoire tampon d'entrée (EP) pour la bufférisation d'un flux de données (KD1, KD2) reçu par le réseau local (LAN), un dispositif d'enregistrement de niveau de remplissage pour la détection du niveau de remplissage de la mémoire tampon d'entrée (EP) et un appareil de réglage de fréquence de rythme (FS) pour le réajustage de la fréquence de rythme du générateur de rythme (ZTG) en fonction du niveau de remplissage enregistré.

22. Dispositif selon l'une quelconque des revendications 16 à
21,
**caractérisé**
**en ce que** les stations de base (BS1, BS2) présentent respectivement un circuit PLL pour le réglage de la fréquence de rythme du générateur de rythme (ZTG).

23. Dispositif selon l'une quelconque des revendications 15 à
22,
**caractérisé**
**en ce que** les stations de base (BS1, BS2) sont voisines dans le réseau local (LAN).
